# EUROPÄISCHE PATENTSCHRIFT

(11) **EP 1 620 667 B1**
(45) Veröffentlichungstag und Bekanntmachung des Hinweises auf die Patenterteilung: **14.05.2008**
(21) Anmeldenummer: 04730824.2
(22) Anmeldetag: 03.05.2004
(51) Int. Cl.: F16K 31/06, F16K 31/04, H01F 7/123

(54) **HUBMAGNETANORDNUNG**
SOLENOID ASSEMBLY
DISPOSITIF ELECTRO-AIMANT DE LEVAGE

(30) Priorität: 08.05.2003 DE 10320729
(43) Veröffentlichungstag der Anmeldung: 01.02.2006
(73) Patentinhaber: Bosch Rexroth AG, 70184 Stuttgart (DE)
(72) Erfinder: SCHEMPP, Roland, 71665 Vaihingen (DE); OLEMS, Lars, 70374 Stuttgart (DE)
(74) Vertreter: Winter, Konrad Theodor
(86) Internationale Anmeldenummer: PCT/DE2004/000928
(87) Internationale Veröffentlichungsnummer: WO 2004/102050

(56) Entgegenhaltungen:
- EP-A- 0 564 794
- US-A- 3 235 777
- US-A- 3 893 053
- US-A- 3 895 331
- US-A- 4 494 096
- US-A- 4 697 164
- US-A- 5 309 944

## Beschreibung

Die Erfindung betrifft eine Hubmagnetanordnung für ein hydraulisches Ventil, insbesondere für ein Servo- oder Regelventil, gemäß dem Oberbegriff des Patentanspruches 1.

In der Proportional- und Servoventiltechnik werden zur Betätigung von Ventilschiebern in der Regel Proportional-Magnete eingesetzt. Für den Fall eines Stromausfalles muß der Ventilschieber in eine vorbestimmte Lage verschoben werden, in der Richtung und Größe eines Druckmittelvolumenstromes so gesteuert ist, dass sich ein sicherer Betriebszustand des angesteuerten hydraulischen Systems einstellt.

Im einfachsten Fall wird diese Fail-Safe-Position durch eine Zentrierfederanordnung eingestellt, über die der Ventilschieber in eine Grundposition vorgespannt ist. Nachteil dieser Lösung ist, dass durch die Zentrierfedern die Dynamik des Ventils verschlechtert wird, da die Federkraft durch die Proportionalmagneten zunächst überwunden werden muß, um den Ventilschieber in eine Regelposition zu bringen. Darüber hinaus wird durch die Zentrierfedern die Eigen- oder Grenzfrequenz des Ventils verändert. Bei erhöhten dynamischen Anforderungen an das Proportionalventil können daher derartige Zentrierfedern nicht verwendet werden. In diesem Fall kann dann ein zusätzliches Fail-Safe-Ventil zwischen den Proportionalventil und den Verbraucher geschaltet werden, um eine definierte, d.h. sichere Druck- und Durchflusssituation zu gewährleisten. Dieses zusätzliche Fail-Safe-Ventil erfordert allerdings einen erheblichen Zusatzaufwand, der durch die hydraulische und elektrische Anbindung des Fail-Safe-Ventils und die entsprechend komplexe Schaltlogik entsteht.

Aus der DE 43 16 637 C2 ist eine Hubmagnetanordnung bekannt, bei der neben einem herkömmlichen Proportionalmagenten eine Fail-Safe-Einrichtung vorgesehen ist, die eine Fail-Safe-Spule und einen Fail-Safe-Anker hat. Letzterer ist über eine Feder in eine Anschlagposition gegen den Anker des Proportionalmagneten vorgespannt, der seinerseits einen Ventilschieber beaufschlagt. Bei Stromausfall, d.h. bei unbestromtem Proportionalmagneten und bei unbestromter Fail-Safe-Einrichtung wird der Ventilschieber über den federvorgespannten Fail-Safe-Anker und den Anker des Proportionalventils in eine Fail-Safe-Position verschoben. Bei Bestromung der Fail-Safe-Einrichtung wird der Fail-Safe-Anker gegen die Kraft der Feder vom Anker des Proportionalmagneten weg bewegt, so daß der Ventilschieber in Abhängigkeit von der Ansteuerung des Proportionalmagneten in eine Regelposition verschoben wird. Die aus der DE 43 16 637 C2 bekannte Lösung erlaubt es jedoch nicht, den Hub des Proportionalmagneten mit einem herkömmlichen Wegmeßsystem zu erfassen, das axial an der vom Ventilschieber abgewandten Seite des Proportionalventils angeordnet wird, da in diesem Bereich bereits der Fail-Safe-Magnet vorgesehen ist.

Aus der DE 197 05 598 A1 ist ein Proportional- oder Servoventil bekannt, bei dem der Proportionalmagnet zur Betätigung des Ventilschiebers mit einem drehbaren Anker versehen ist. Die Fail-Safe-Position wird bei dieser bekannten Lösung dadurch eingestellt, dass im stromlosen Zustand der Anker gegenüber gehäusefesten Statorpolen verdreht und diese Drehbewegung des Ankers über eine angepasste Steuergeometrie auf den Ventilschieber übertragen wird, so dass dieser seinerseits in eine Fail-Safe-Position verschoben wird. Nachteil dieser Lösung ist, dass ein erheblicher vorrichtungstechnischer Aufwand zur Lagerung des Ankers und zur Übertragung der Drehbewegungen erforderlich ist.

Demgegenüber liegt der Erfindung die Aufgabe zugrunde, eine Hubmagnetanordnung für ein hydraulisches Ventil zu schaffen, das im Fall eines Stromausfalles mit minimalem vorrichtungstechnischen Aufwand in eine Fail-Safe-Position verschiebbar ist.

Diese Aufgabe wird durch eine Hubmagnetanordnung mit den Merkmalen des Patentanspruches 1 gelöst.

Die erfindungsgemäße Hubmagnetanordnung hat neben einem herkömmlichen Proportionalmagenen mit einer Spulenanordnung und einem Anker noch eine Fail-Safe-Einrichtung - im folgenden FS-Einrichtung genannt, die in Axialrichtung gesehen zwischen einem Ventilschieber des Ventils und dem Proportionalventil, d.h. der Spulenanordnung und dem zugeordneten Anker ausgebildet ist. Dabei durchsetzt oder umgreift der Anker oder ein mit ihm verbundener Stößel die FS-Einrichtung. Eine derartige Konstruktion ermöglicht es, ein Wegmeßsystem in üblicher Weise an der vom Ventilschieber abgewandten Seite des Proportionalmagneten vorzusehen, so dass sich die Hubmagnetanordnung sehr kompakt und einfach ausführen lässt.

Bei einer besonders bevorzugten Ausführungsform hat der mit dem Ventilschieber verbundene Stößel des Ankers des Proportionalventils einen Anschlagbund, auf den zur Einstellung der FS-Position ein FS-Anker der FS-Einrichtung aufläuft. Dieser FS-Anker ist mittels einer Feder in Richtung der FS-Position vorgespannt.

Bei einer Variante der Erfindung ist diese Feder an einem Polstück abgestützt, das seinerseits in einem Bereich zwischen dem Anker des Proportionalmagneten und dem FS-Anker in ein Druckrohr der Hubmagnetanordnung eingesetzt ist.

Bei einer alternativen Lösung wirkt der FS-Anker selbst als Polstück, das verschiebbar im Druckrohr geführt ist. Dabei wird es bevorzugt, wenn der FS-Anker stufenförmig ausgeführt ist und ein Endabschnitt mit geringerem Durchmesser in demjenigen Bereich des Druckrohres geführt ist, in dem auch der Anker des Proportionalmagneten verschiebbar gelagert ist. Ein Abschnitt des FS-Ankers mit größerem Durchmesser ist in einem entsprechend erweiterten Bereich des Druckrohres aufgenommen, wobei die Feder an diesem im Durchmesser erweiterten Bereich angreift.

Zur Verringerung der axialen Baulänge der Hubmagnetanordnung kann in diesem Bereich des FS-Ankers mit größerem Durchmesser eine Ringnut vorgesehen werden, in die die Feder eintaucht. Diese ist dann an einer Radialschulter des Druckrohres abgestützt.

Der FS-Anker kann auch tassenförmig ausgebildet werden, so dass die Feder an einer inneren Stirnfläche des tassenförmigen FS-Kolbens angreift.

Je nach Konstruktion ist der Stößel des Proportionalmagneten in dem an den Anker angrenzenden Polstück und/oder in dem FS-Anker geführt.

Zur Minimierung der Abfallverzögerung werden die Stirnflächen, auf die der FS-Anker oder der Anker des Proportionalmagenten auflaufen mit einem nicht magnetisierbaren Material versehen.

Bei einem besonders bevorzugten Ausführungsbeispiel der Erfindung ist der Proportionalmagnet als Doppelhubmagnet mit zwei Spulen ausgeführt, über die jeweils ein Hub in entgegengesetzten Richtungen realisierbar ist.

Die FS-Spule und die beiden Spulen des Doppelhubmagneten werden vorzugsweise koaxial zueinander angeordnet.

Die Ansteuerung der FS-Einrichtung kann entweder über eine eigene Endstufe oder dadurch erfolgen, dass der Summenstrom der beiden Spulen des Doppelhubmagneten durch die FS-Spule der FS-Einrichtung geleitet wird. Prinzipiell kann die FS-Einrichtung auch direkt an die Versorgung der Ventilelektronik derart angeschlossen werden, dass bei Stromlos-Schalten der Hubmagnetanordnung die freiwerdende magnetische Energie der FS-Einrichtung den Proportionalmagneten noch für einige Millisekunden mit Strom versorgt, so dass die Zeitspanne verkürzt wird, in der der Ventilschieber nicht mehr geregelt ist und die FS-Stellung noch nicht erreicht wurde.

Sonstige vorteilhafte Weiterbildungen der Erfindung sind Gegenstand weiterer Unteransprüche.

Im folgenden werden bevorzugte Ausführungsbeispiele der Erfindung anhand schematischer Zeichnungen näher erläutert. Es zeigen:

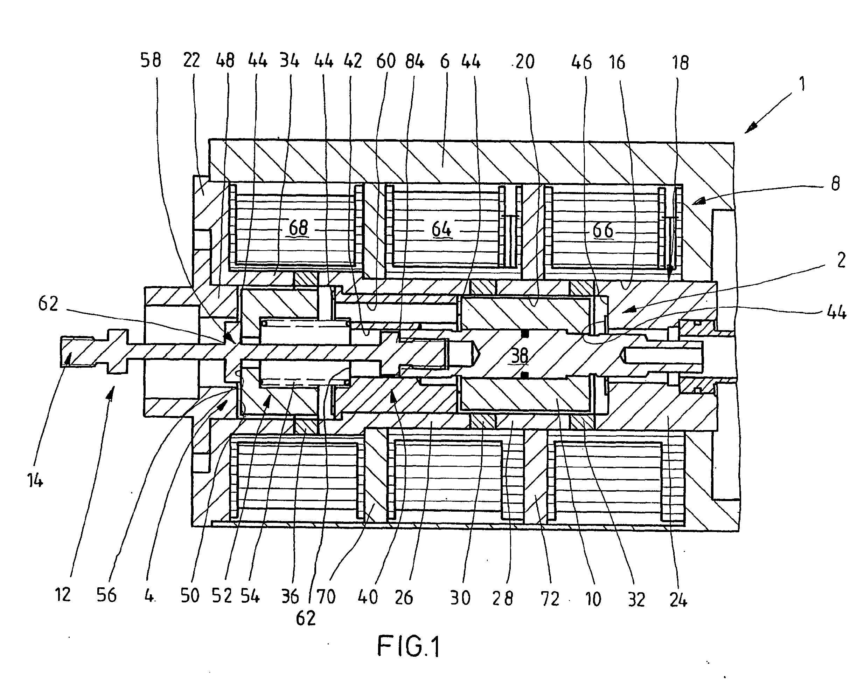

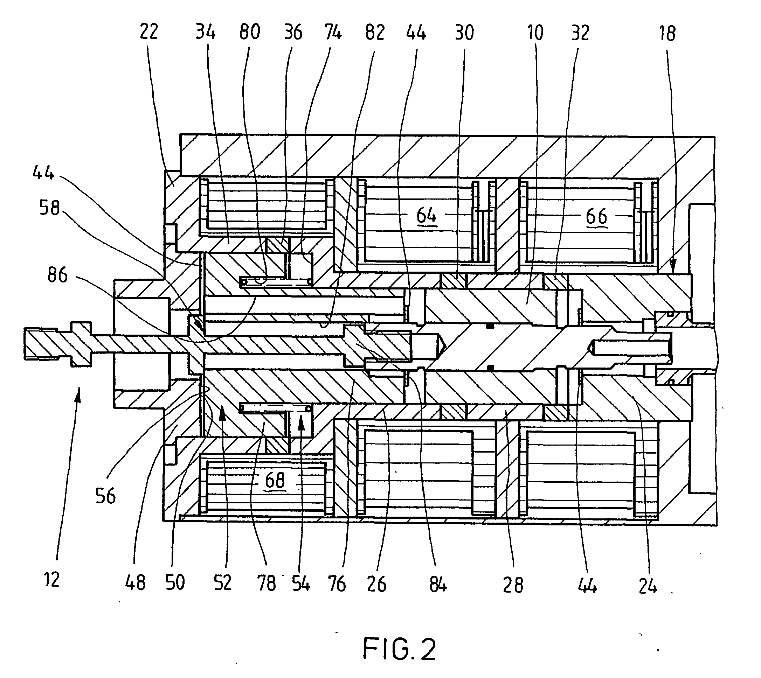

Figuren 1 und 2 zwei Ausführungsbeispiele einer Hubmagnetanordnung für ein Servo- oder Regelventil, wobei ein Proportionalmagnet der Hubmagnetanordnung als Doppelhubmagnet ausgeführt ist.
Figur 1 zeigt einen Längsschnitt durch eine Hubmagnetanordnung 1 eines Servo- oder Regelventils. Die Hubmagnetanordnung 1 besteht im wesentlichen aus einem Doppelhubmagneten 2 und einem Fail-Safe-(FS)Magneten 4, die in einem Gehäuse 6 aus magnetisch leitendem Material angeordnet sind. Der Doppelhubmagnet 2 hat eine Spulenanordnung 8 und einen Anker 10, der mit einem Stößel 12 verbunden ist, über den ein nicht dargestellter Schieber des Regel- oder Servoventils betätigbar ist. Dieser Schieber wird auf den mit einem Gewinde versehenen Endabschnitt 14 des Stößels 12 aufgesetzt. In einem sich in der Figur 1 rechts anschließenden Bereich des Gehäuses 6 ist ein induktives Wegmeßsystem angeordnet, über das der Hub des Stößels 12 und damit der Hub des Ventilschiebers erfasst werden kann. Ein derartiges Wegmeßsystem ist beispielsweise in der DE 42 08 367 A1 beschrieben.

Das Gehäuse 6 hat eine Axialbohrung 16, in die ein Druckrohr 18 eingesetzt ist. Dieses ist von einer Aufnahmebohrung 20 durchsetzt, in der unter anderem der Anker 10 des Doppelhubmagneten 2 axial verschiebbar geführt ist. Das Druckrohr 18 hat an seinem linken Endabschnitt einen radial vorspringenden Befestigungsflansch 22, über den die Hubmagnetanordnung am Gehäuse des Regelventils befestigbar ist. Das Druckrohr 18 ist mehrteilig ausgeführt und hat ein Druckrohrendstück 24, ein Ankerrohr, das durch zwei Zwischenstücke 26, 28 sowie zwei zwischen den Zwischenstücken 26, 28 bzw. zwischen dem Zwischenstück 28 und dem Druckrohrendstück 24 angeordneten Ringteilen 30, 32 gebildet ist. Das Druckrohr 18 hat des weiteren ein in das Flanschteil 22 übergehendes Druckrohrstück 34, das über ein weiteres Ringteil 36 vom Zwischenstück 26 getrennt ist. Das Druckrohrstück 34 und das Druckrohrendstück 24, das als Polschuh für den Anker 10 wirkt, sind wie die Zwischenstücke 26 und 28 aus magnetisierbarem Material hergestellt.

Bei dem in Figur 1 dargestellten Ausführungsbeispiel hat der Anker 10 ein axial vorspringendes Mittelstück 38, in das der Stößel 12 und ein nicht dargestellter Kernträger des Messaufnehmers eingeschraubt sind.

In demjenigen Bereich der Aufnahmebohrung 20 des Druckrohres 18, in dem der Anker 10 geführt ist, ist ein Pol 40 eingesetzt und in Axialrichtung fixiert. Dieser Pol 40 hat eine Durchgangsbohrung 42, die vom Stößel 12 und von dem linken Endabschnitt des Mittelstückes 38 durchsetzt ist. Dabei ist der Stößel mit einem radial vorspringenden Führungsbund 84 in der Durchgangsbohrung geführt. Die in Figur 1 rechte Ringstirnfläche des Pols 40 bildet eine Anschlagfläche für den Anker 10. In diesem Anlagebereich des Ankers 10 ist eine Scheibe 44 aus unmagnetischem Material vorgesehen, über die eine Abfallverzögerung verkürzt wird. Der Weg des Ankers 10 nach rechts in Figur 1 wird durch eine Radialschulter 46 der Aufnahmebohrung 20 begrenzt, an der ebenfalls eine Scheibe 44 zur Verkürzung der Abfallverzögerung vorgesehen ist. Eine derartige Scheibe 44 ist auch an der in Figur 1 linken Ringstirnfläche des Pols 40 vorgesehen.

Der stirnseitige Mündungsbereich der Aufnahmebohrung 20 ist durch ein Polstück 48 zumindest abschnittsweise verschlossen, das vom Stößel 12 durchsetzt ist. An einer in Figur 1 rechten Ringstirnfläche des Polstückes 48 ist wiederum eine Scheibe 44 vorgesehen. Diese mit der Scheibe 44 versehene Ringstirnfläche 50 des Polstückes 48 bildet einen Anschlag für einen FS-Anker 52 des FS-Magneten 4. Dieser FS-Anker 52 ist über eine Feder 54 gegen die Ringstirnfläche 50 vorgespannt. Die Feder ist 54 an einer Ringschulter der Durchgangsbohrung 42 des Pols 40 abgestützt. Die in Figur 1 linke Stirnfläche 56 des FS-Ankers läuft in der dargestellten Position auf einen radial vorspringenden Anschlagbund 58 des Stößels 12 auf, so dass dieser durch den FS-Anker 52 nach links (Figur 1) mitgenommen wird, bis die Stirnfläche 56 auf die Ringstirnfläche 50 des Polstückes 48 aufläuft. In dieser Position liegt der Anker 10 mit seiner linken Stirnfläche am Pol 40 an. D.h. der mit dem Stößel 12 verbundene Ventilschieber des Regelventils ist in der dargestellten Position durch die Kraft der Feder 54 in seine linke Endstellung verschoben.

Zur Verringerung der axialen Baulänge der Hubmagnetanordnung 1 ist bei dem dargestellten Ausführungsbeispiel der FS-Anker tassenförmig ausgebildet, wobei die Feder 54 abschnittsweise in den FS-Anker 52 eintaucht und an einer Innenstirnfläche 62 angreift.

Die in Figur 1 dargestellte Hubmagnetanordnung ist mit Druckmittel gefüllt, wobei im Polstück 40 eine Längsbohrung 60 vorgesehen ist, so dass Druckmittel von dem den FS-Anker 52 aufnehmenden Raum in den den Anker 10 aufnehmenden Raum und von dort über eine radial zurückgesetzte Verbindungsbohrung in einen das Wegmeßsystem aufnehmenden Raum des Gehäuses 6 eintreten kann.

Die Spulenanordnung 8 hat zwei Spulen 64, 66, die von zwei getrennten Steuerkreisen angesteuert werden. Die Spulen 64,66 sind so geschaltet, dass sie in den Arbeitsluftspalten des Doppelhubmagneten gegeneinander gerichtete Kräfte erzeugen, so dass ziehende und drückende Kräfte erzeugt werden können. In der in Figur 1 dargestellten Ruhestellung werden beide Spulen 64, 66 mit einem Vorstrom beaufschlagt, der etwa die Hälfte des Maximalstromes einer Spule beträgt. Die dabei entgegengesetzt auf den Anker 10 wirkende Kräfte halten ihn in seiner Grundposition, in der der Anker 10 etwa mittig zwischen der Radialschulter 46 der Aufnahmebohrung 20 und der benachbarten Ringstirnfläche des Pols 40 angeordnet ist. Durch Änderung der Bestromung in einer oder in beiden Spulen 64, 66 wird das Kräftegleichgewicht am Anker 10 gestört und durch die resultierende Magnetkraft wird dieser dann entsprechend nach rechts oder nach links verschoben. Durch die Vormagnetisierung ist die Dynamik des Doppelhubmagneten verbessert. Durch die symmetrische Ausgestaltung der Kraftverhältnisse wird die Auslegung einer Lageregelung mit Hilfe des nicht dargestellten Wegmeßsystems erheblich vereinfacht.

Der FS-Magnet 4 hat eine FS-Spule 68, die bei dem in Figur 1 dargestellten Ausführungsbeispiel von dem vorbeschriebenen Summenstrom der beiden Spulen 64, 66 durchströmt wird. Auf den FS-Anker wirkt dann eine Magnetkraft, die groß genug ist, um diesen gegen die Kraft der Feder 54 von der Ringstirnfläche 50 des Polstückes 48 abzuheben und damit auch die Anlage an den Anschlagbund 58 aufzuheben. Der Stößel 12 und damit der Anker 20 können dann durch ihre durch den Summenstrom bedingte Grundposition oder durch entsprechende Ansteuerung in eine der Regelpositionen verfahren werden.

Zwischen den Spulen 64, 66 bzw. den Spulen 68, 64 sind jeweils Polscheiben 70, 72 aus magnetflußleitendem Material angeordnet, die sich in Radialrichtung zwischen dem Gehäuse 6 und dem Druckrohr 18 erstrecken.

Bei Stromausfall oder Abschalten der Hubmagnetanordnung werden alle drei Spulen 64, 66, 68 stromlos, so dass keine Magnetkräfte auf die Anker 52, 10 wirken. Dadurch kann der FS-Anker 52 durch die Kraft der Feder 54 nach links verschoben werden bis er auf die Ringstirnfläche 50 des Polstückes 48 aufläuft. Während dieses Hubs läuft der FS-Anker 52 auf den Anschlagbund 58 auf, so dass der Stößel 12 und damit der Ventilschieber in die erwähnte Endstellung verfahren werden.

Anstelle der Lösung, bei der die FS-Spule 68 mit dem Summenstrom der beiden Spulen 64, 66 beaufschlagt ist, könnte der FS-Magnet 4 auch über eine eigene Endstufe versorgt werden. Dabei wäre dann beim Zuschalten beispielsweise eine Übererregung möglich, was die Baugröße des FS-Magneten verringert. Bei einer zweiten Alternative kann der FS-Magnet 4 auch direkt an die Versorgung der Ventilelektronik angeschossen werden. Bei geeigneter Schaltungsauslegung könnte dann die beim Abschalten frei werdende Energie des FS-Magneten 68 den Doppelhubmagneten 2 noch für einige Millisekunden mit Strom versorgen. Dadurch würde diejenige Zeit verkürzt werden, in der der Ventilschieber nicht mehr geregelt ist, aber die Feder 54 den Ventilschieber - oder genauer gesagt den Stößel 12, mit dem Anker 20 noch nicht in die vordefinierte Endstellung verschoben hat. Prinzipiell könnte diese Endstellung auch eine extra definierte FS-Stellung sein, die nur bei Stromlos-Schalten angefahren wird.

Figur 2 zeigt eine Variante, bei der dieses Anfahren der FS-Stellung durch einen größeren Hub des Stößels 12 erleichtert ist.

Der Grundaufbau des in Figur 2 dargestellten Ausführungsbeispieles einer Hubmagnetanordnung 1 entspricht im wesentlichen demjenigen des vorbeschriebenen Ausführungsbeispieles, so dass im folgenden nur auf diejenigen Bauelemente eingegangen wird, die gegenüber dem vorbeschriebenen Ausführungsbeispiel verändert sind.

Das Druckrohr 18 hat ähnlich wie beim vorbeschriebenen Ausführungsbeispiel ein Druckrohrendstück 24, Zwischenstücke 26, 28 sowie ein einstückig mit dem Flanschteil 22 ausgebildetes Druckrohrstück 34. Zwischen den vorgenannten Bauelementen des Druckrohres 18 sind wiederum die nicht magnetisierbaren Ringteile 30, 32 und 36 angeordnet.

Ein wesentlicher Unterschied zum vorbeschriebenen Ausführungsbeispiel liegt darin, dass bei der in Figur 2 dargestellten Version der FS-Anker 52 gleichzeitig den Pol 40 ausbildet. Dazu ist der FS-Anker 52 als stufenförmiger Anker mit einem radial zurückgesetzten Endabschnitt 76 und einem radial vorspringenden Basisteil 78 ausgebildet. Letzteres ist in einem durch das Druckrohrstück 34 und durch den in Figur 2 linken Endabschnitt des Zwischenstückes 26 mit einer Radialschulter 74 begrenzten Raum geführt. Das Basisteil 78 des FS-Ankers 52 hat eine Ringnut 80, in die der in Figur 2 linke Endabschnitt der Feder 54 eintaucht, die ihrerseits an der Radialschulter 74 abgestützt ist. Diese, einen Teil der Feder 54 aufnehmende Ringnut 80 trägt dazu bei, die Axiallänge der Hubmagnetanordnung 1 zu verkürzen.

Der FS-Anker 52 ist über die Feder 54 mit seiner linken Stirnfläche 56 gegen die Ringstirnfläche 50 des Polstückes 48 vorgespannt. Im Anlagebereich ist wiederum eine Scheibe 44 aus nicht magnetisierbarem Material angeordnet. Eine entsprechende Scheibe 44 ist an der in Figur 2 rechten, kleineren Stirnfläche des FS-Ankers 52 angeordnet. Dieser hat eine axial verlaufende Bohrung 82, die vom Stößel 12 und dem dazu benachbarten Endabschnitt des Mittelstückes 38 des Ankers 10 durchsetzt ist. Im Bereich dieser Bohrung 82 ist am Stößel 12 der Führungsbund 84 ausgebildet, so dass der Stößel bei diesem Ausführungsbeispiel innerhalb des FS-Ankers 52 geführt ist.

Der FS-Anker 52 hat des weiteren eine Verbindungsbohrung 86, über die der axial an das Polstück 48 angrenzende Raum mit dem den Anker 10 aufnehmenden Raum des Druckrohres 18 verbunden ist, so dass eine vollständige Füllung der Hubmagnetanordnung mit Druckmittel gewährleistet ist.

Aufgrund des im Bereich des Druckrohrstückes 34 radial erweiterten Druckrohres 18 muß die FS-Spule 68 gegenüber den beiden anderen Spulen 64, 66 radial etwas kompakter gewickelt sein. Die Ansteuerung der FS-Spule 68 erfolgt in gleicher Weise wie beim vorbeschriebenen Ausführungsbeispiel vorzugsweise über den Summenstrom der beiden Spulen 64, 66 des Doppelhubmagneten oder über eine eigene Endstufe bzw. über die Ventilelektronik.

Bei Stromausfall oder nicht bestromten Spulen 64, 66, 68 wird der FS-Anker 52 durch die Kraft der Feder 54 nach links verschoben bis die größere Stirnfläche 56 auf die Ringstirnfläche 50 des Polstückes 48 aufläuft. Dabei wird der Stößel 12 über den Anschlagbund 58 mitgenommen und entsprechend der Ventilschieber in eine Endstellung gebracht, die einer Betriebsstellung des Ventils oder einer eigenen FS-Stellung entsprechen kann.

Bei Bestromung der beiden Spulen 64, 66 und entsprechender Bestromung der FS-Spule 68 wird der FS-Anker 52 gegen die Kraft der Feder 54 nach rechts verschoben, so dass die Anlage zwischen dem FS-Anker 52 und dem Stößel aufgehoben wird - der Anker 10 kann ungehindert, in Abhängigkeit von der Ansteuerung der Spulen 64, 66 nach links oder rechts (ziehend oder drückend) verschoben werden, wobei der in seine rechte Anschlagposition verfahrene FS-Anker dann als Pol wirkt.

Die vorbeschriebenen Ventilanordnungen können noch mit einem Handnotbolzen ausgeführt werden, um den Anker 10 im Bedarfsfall von Hand und von außen axial in eine gewünschte Position zu verschieben.

Offenbart ist eine Hubmagnetanordnung für ein Servo- oder Regelventil mit einem Proportionalmagneten, der über einen Stößel auf einen Ventilschieber des Regel- oder Servoventils wirkt. Zwischen dem Schieber und dem Proportionalmagneten ist ein Fail-Safe-Magnet vorgesehen, der vom Stößel des Proportionalmagneten durchsetzt oder umgriffen ist.

### Bezugszeichenliste

- 1: Hubmagnetanordnung
- 2: Doppelhubmagnet
- 4: Fail-Safe-Magnet
- 6: Gehäuse
- 8: Spulenanordnung
- 10: Anker
- 12: Stößel
- 14: Endabschnitt
- 16: Axialbohrung
- 18: Druckrohr
- 20: Aufnahmebohrung
- 22: Flanschteil
- 24: Druckrohrendstück
- 26: Zwischenstück
- 28: Zwischenstück
- 30: Ringteil
- 32: Ringteil
- 34: Druckrohrstück
- 36: Ringteil
- 38: Mittelstück
- 40: Pol
- 42: Durchgangsbohrung
- 44: Scheibe
- 46: Radialschulter
- 48: Polstück
- 50: Ringstirnfläche
- 52: FS-Anker
- 54: Feder
- 56: Stirnfläche (FS-Anker)
- 58: Anschlagbund
- 60: Längsbohrung
- 62: Innenstirnfläche
- 64: Spule
- 66: Spule
- 68: FS-Spule
- 70: Polscheibe
- 72: Polscheibe
- 74: Radialschulter
- 76: Endabschnitt
- 78: Basisteil
- 80: Ringnut
- 82: Bohrung
- 84: Führungsbund
- 86: Verbindungsbohrung

## Patentansprüche

1. Hubmagnetanordnung für ein hydraulisches Ventil, insbesondere ein Servo- oder Regelventil, mit einem Druckrohr (18), in dem ein Anker (10) verschiebbar geführt ist, der durch Bestromung einer Spulenanordnung (8) einen mit einem Ventilschieber des Ventils verbindbaren Stößel (12) verschiebbar betätigt, und mit einer Fail-Safe-Einrichtung (4) mit einem verschiebbaren Fail-Safe-Anker (52), über den der Stößel (12) stromlos in eine vorbestimmte Fail-Safe-Position verschiebbar ist und der durch Bestromung einer Fail-Safe-Spule (68) aus der Fail-Safe-Position heraus bewegbar ist, **dadurch gekennzeichnet, dass** die Fail-Safe-Einrichtung (4) axial stößelseitig vor der Spulenanordnung (8) angeordnet ist und von dem Stößel (12) des Ankers (10) durchsetzt oder umgriffen ist.

2. Hubmagnetanordnung nach Patentanspruch 1, wobei der Stößel (12) einen Anschlagbund (58) hat, an den der im Druckrohr (18) verschiebbar geführte und in Richtung der Fail-Safe-Positon vorgespannte FS-Anker (52) in Anlage bringbar ist.

3. Hubmagnetanordnung nach Patentanspruch 2, wobei eine den FS-Anker (52) vorspannende Feder (54) an einem Polstück (40) abgestützt ist, das im Druckrohr (18) zwischen dem Anker (10) und dem FS-Anker (52) angeordnet ist.

4. Hubmagnetanordnung nach Patentanspruch 2, wobei die Feder (54) an einer Radialschulter (74) des Druckrohres (18) abgestützt ist und der FS-Anker (52) als Polstück für den Anker (10) wirkt.

5. Hubmagnetanordnung nach einem der Patentansprüche 2 bis 4, wobei der FS-Anker (52) gegen einen Pol (40) vorgespannt ist, der in das Druckrohr (18) eingesetzt ist.

6. Hubmagnetanordnung nach Patentanspruch 3, wobei der FS-Anker (52) tassenförmig ausgebildet ist und an dessen Innenstirnfläche die Feder (54) angreift.

7. Hubmagnetanordnung nach Patentanspruch 4, wobei der FS-Anker (52) stufenförmig ausgebildet ist und ein radial zurückgesetzter Endabschnitt (76) in denjenigen Teil des Druckrohres (18) eintaucht, in dem der Anker (10) geführt ist und wobei ein radial vorspringendes Basisteil (58) des FS-Ankers (52) in einem entsprechend erweiterten Teil des Druckrohres (18) geführt ist.

8. Hubmagnetanordnung nach Patentanspruch 7, wobei in Verlängerung des Endabschnittes (26) eine Ringnut (80) im Basisteil (78) des FS-Ankers (52) ausgebildet ist, in die die Feder (54) abschnittsweise eintaucht.

9. Hubmagnetanordnung nach einem der vorhergehenden Patentansprüche, wobei an zwischen den Stirnflächen der Anker (52, 10) und den Stirnflächenabschnitten der mit dem Anker (10, 52) in Anlage gelangenden Bauelemente eine Scheibe (44) aus nicht magnetisierbarem Material vorgesehen ist.

10. Hubmagnetanordnung nach einem der vorhergehenden Patentansprüche, wobei die Spulenanordnung (8) zwei Spulen (64, 66) zur Ausbildung eines Doppelhubmagneten (2) hat.

11. Hubmagnetanordnung nach einem der vorhergehenden Patentansprüche, wobei die FS-Spule (68) und die Spulenanordnung (8) koaxial zueinander angeordnet sind.

12. Hubmagnetanordnung nach Patentanspruch 10, wobei ein Summenstrom der beiden Spulen (64, 66) durch die FS-Spule (68) geleitet ist.

13. Hubmagnetanordnung nach einem der vorhergehenden Patentansprüche, wobei die FS-Spule (68) über eine eigene Endstufe versorgt ist.

14. Hubmagnetanordnung nach einem der vorhergehenden Patentansprüche, wobei die FS-Spule (68) an die Versorgung der Ventilelektronik derart angeschlossen ist, dass beim Abschalten frei werdende magnetische Energie die Spulenanordnung (8) noch für einige Millisekunden mit Strom versorgt.

15. Hubmagnetanordnung nach einem der vorhergehenden Patentansprüche, mit einem Wegmeßsystem zur Erfassung des Hubs des Ventilschiebers.

## Claims

1. A lifting magnet assembly for a hydraulic valve, in particular a servo valve or control valve, comprising a pressure tube (18) in which an armature (10) is slidably guided which may be slidingly actuates a tappet (12) adapted to be connected to a valve spool of the valve by energizing a coil arrangement (8), and comprising failsafe means (4) including a failsafe armature (52) by means of which the tappet (12) may be shifted into a predetermined failsafe position in the de-energized condition and which may be moved out of the failsafe position by energizing a failsafe coil (68), **characterized in that** the failsafe means (4) are disposed axially on the tappet side before the coil arrangement (8) and are penetrated or encompassed by the tappet (12) of the armature (10).

2. The lifting magnet assembly in accordance with claim 1, wherein the tappet (12) includes a stop collar (58) against which the FS armature (52) slidingly guided in the pressure tube (18) and biased in a direction towards the failsafe position may be taken into contact.

3. The lifting magnet assembly in accordance with claim 2, wherein a spring (54) biasing the FS armature (52) is supported on a pole piece (40) arranged in the pressure tube (18) between the armature (10) and the FS armature (52).

4. The lifting magnet assembly in accordance with claim 2, wherein the spring (54) is supported on a radial shoulder (74) of the pressure tube (18), and the FS armature (52) acts as a pole piece for the armature (10).

5. The lifting magnet assembly in accordance with any one of claims 2 to 4, wherein the FS armature (52) is biased against a pole (40) inserted in the pressure tube (18).

6. The lifting magnet assembly in accordance with claim 3, wherein the FS armature (52) is given a cup shape, at the internal end face of which the spring (54) attacks.

7. The lifting magnet assembly in accordance with claim 4, wherein the FS armature (52) has a stepped configuration, and a radially set-back end portion (76) plunges into the part of the pressure tube (18) in which the armature (10) is guided, and wherein a radially projecting base part (58) of the FS armature (52) is guided in a correspondingly expanded part of the pressure tube (18).

8. The lifting magnet assembly in accordance with claim 7, wherein in prolongation of the end portion (26) an annular groove (80) is formed in the base part (78) of the FS armature (52), into which the spring (54) plunges with portions thereof.

9. The lifting magnet assembly in accordance with any one of the preceding claims, wherein a disc (44) of non-magnetizable material is provided between the end faces of the armature (52, 10) and the end face portions of the components entering into contact with the armature (10, 52).

10. The lifting magnet assembly in accordance with any one of the preceding claims, wherein the coil arrangement (8) comprises two coils (64, 66) for the formation of a double-action lifting magnet (2).

11. The lifting magnet assembly in accordance with any one of the preceding claims, wherein the FS coil (68) and the coil arrangement (8) are arranged coaxial with each other.

12. The lifting magnet assembly in accordance with claim 10, wherein a summed current of the two coils (64, 66) is conducted through the FS coil (68).

13. The lifting magnet assembly in accordance with any one of the preceding claims, wherein the FS coil (68) is supplied via a dedicated end stage.

14. The lifting magnet assembly in accordance with any one of the preceding claims, wherein the FS coil (68) is connected to the power supply of the valve electronics such that the magnetic energy released upon de-energization continues to supply the coil arrangement (8) with current for several milliseconds.

15. The lifting magnet assembly in accordance with any one of the preceding claims, including a stroke measuring system for detecting the stroke of the valve spool.

## Revendications

1. Dispositif électro-aimant de levage pour une soupape hydraulique, notamment une servo-soupape ou une soupape de réglage, avec un tube de pression (18), dans lequel un induit (10) est guidé de manière mobile, lequel actionne de manière mobile par activation d'un ensemble de bobine (8) un poussoir (12) pouvant être relié à un tiroir de soupape, et avec un dispositif Fail-Safe (4) doté d'un induit Fail-Safe (52) mobile, par le biais duquel le poussoir (12) peut être déplacé sans courant dans une position Fail-Safe prédéterminée et qui peut être déplacé par activation d'une bobine Fail-Safe (68) hors de la position Fail-Safe, **caractérisé en ce que** le dispositif Fail-Safe (4) est disposé axialement côté poussoir avant l'ensemble de bobine (8) et est traversé ou entouré par le poussoir (12) de l'induit (10).

2. Dispositif électro-aimant de levage selon la revendication 1, dans lequel le poussoir (12) présente un collet de butée (58), contre lequel l'induit FS (52) précontraint en direction de la position Fail-Safe et guidé de manière mobile dans le tube de pression (18) peut être amené en appui.

3. Dispositif électro-aimant de levage selon la revendication 2, dans lequel un ressort (54) précontraignant l'induit FS (52) est appuyé contre une pièce polaire (40) qui est disposée dans le tube de pression (18) entre l'induit (10) et l'induit FS (52).

4. Dispositif électro-aimant de levage selon la revendication 2, dans lequel le ressort (54) est appuyé contre un épaulement radial (74) du tube de pression (18) et l'induit FS (52) agit comme une pièce polaire pour l'induit (10).

5. Dispositif électro-aimant de levage selon l'une quelconque des revendications 2 à 4, dans lequel l'induit FS (52) est précontraint contre un pôle (40) qui est inséré dans le tube de pression (18).

6. Dispositif électro-aimant de levage selon la revendication 3, dans lequel l'induit FS (52) est réalisé en forme de tasse et sur la surface avant intérieure duquel s'engage le ressort (54).

7. Dispositif électro-aimant de levage selon la revendication 4, dans lequel l'induit FS (52) est réalisé de manière étagée et une section finale (76) reculée radialement s'enfonce dans la partie du tube de pression (18), dans laquelle l'induit (10) est guidé, et dans lequel une partie de base (58) faisant saillie radialement de l'induit FS (52) est guidée dans une partie élargie en conséquence du tube de pression (18).

8. Dispositif électro-aimant de levage selon la revendication 7, dans lequel en prolongement de la section finale (26), une rainure annulaire (80) est réalisée dans la partie de base (78) de l'induit FS (52), dans laquelle le ressort (54) s'enfonce par sections.

9. Dispositif électro-aimant de levage selon l'une quelconque des revendications précédentes, dans lequel sur des éléments de construction parvenant en appui entre les surfaces avant des induits (52, 10) et les sections de surface avant avec l'induit (10, 52), un disque (44) en un matériau non magnétisable est prévu.

10. Dispositif électro-aimant de levage selon l'une quelconque des revendications précédentes, dans lequel l'ensemble de bobine (8) présente deux bobines (64, 66) pour la réalisation d'un électro-aimant à double levage (2).

11. Dispositif électro-aimant de levage selon l'une quelconque des revendications précédentes, dans lequel la bobine FS (68) et l'ensemble de bobine (8) sont disposés coaxialement l'un par rapport à l'autre.

12. Dispositif électro-aimant de levage selon la revendication 10, dans lequel un courant cumulé des deux bobines (64, 66) est conduit par la bobine FS (68).

13. Dispositif électro-aimant de levage selon l'une quelconque des revendications précédentes, dans lequel la bobine FS (68) est alimentée par le biais d'un propre étage final.

14. Dispositif électro-aimant de levage selon l'une quelconque des revendications précédentes, dans lequel la bobine FS (68) est raccordée à l'alimentation du système électronique de soupape de telle sorte que lors de la mise hors circuit, de l'énergie magnétique se dégageant alimente en courant l'ensemble de bobine (8) encore pour quelques millisecondes.

15. Dispositif électro-aimant de levage selon l'une quelconque des revendications précédentes, avec un système de mesure de course pour la détection de la course du tiroir de soupape.
